# EUROPEAN PATENT APPLICATION

(11) **EP 4 357 411 A1**
(43) Date of publication of application: **24.04.2024**
(21) Application number: 22824873.8
(22) Date of filing: 07.06.2022
(51) Int. Cl.: C08L 23/10, C08L 1/02, C08L 23/26

(54) **RESIN COMPOSITION**

(30) Priority: 16.06.2021 JP 2021100340
(71) Applicant: Mitsui Chemicals, Inc., Tokyo 104-0028 (JP)
(72) Inventor: KANAYA, Hirotaka, Chiba 299-0265 (JP); TAKAHASHI, Yosuke, Chiba 299-0265 (JP); MURATA, Ryunosuke, Chiba 299-0265 (JP)
(74) Representative: Hoffmann Eitle
(86) International application number: PCT/JP2022/022957
(87) International publication number: WO 2022/264881

(57) **Abstract**

This resin composition comprises a propylene-based polymer (A), cellulose fibers (B) and a maleic-anhydride-modified polyolefin wax (C), in which the components (A), (B) and (C) are contained in amounts of 50 to 99.8 parts by mass, 0.1 to 50 parts by mass and 0.1 to 30 parts by mass, respectively, when the total amount of the components (A), (B) and (C) is 100 parts by mass. A polyolefin wax constituting the component (C) comprises an ethylene homopolymer, a copolymer of ethylene and an α-olefin having 3 to 12 carbon atoms, a propylene homopolymer, or a copolymer of propylene and ethylene or an α-olefin having 4 to 12 carbon atoms, and the component (C) satisfies the following requirements: (i) Mn is 300 to 20000; (ii) the softening point is 70 to 160°C; (iii) the density is 830 to 1000 kg/m3; and (iv) the acid value is 30 to 200 mgKOH/g.

## Description

### Technical Field

The present invention relates to a resin composition containing cellulose fibers.

### Background Art

Resin compositions obtained by combining a cellulosic material and a resin are widely known. A natural material such as wood powder, bamboo powder, or rice straw is used as the cellulosic material, and a thermoplastic resin such as polyethylene, polypropylene, or polystyrene is used as the resin. By molding such a resin composition into a desired shape by various molding methods such as extrusion molding method and injection molding method, practical application is being studied as one of the purposes of effective utilization of natural materials that have been discarded as industrial waste materials.

Cellulose fibers with small size have poor moldability, especially low fluidity. Therefore, conventional resin compositions containing cellulosic materials have limitations in use, such as being limited to cellulosic materials having a large size and limiting the content of cellulosic materials. Various additives thus have been developed to improve the fluidity of resin compositions in order to remove these limitations in use.

Patent Literature (hereinafter, referred to as PTL) 1 proposes the combined use of a petroleum resin and a specific polyolefin wax as a compatibilizer for cellulosic materials. PTL 2 discloses a composition containing a specific thermoplastic resin and a specific polyolefin wax having a molecular structure similar to that of the thermoplastic resin, and proposes the use of the polyolefin wax as a compatibilizer for cellulosic materials. In PTLs 1 and 2, wood powder having a large average particle size in the order of micrometers is used as a cellulosic material. On the other hand, small cellulose fibers with an average fiber length in the order of nanometers are used in PLTs 3 and 4.

### Citation List

### Patent Literature

PTL 1
   Japanese Patent No. 6470402
PTL 2
   Japanese Patent Application Laid-Open No. 2020-111690
PTL 3
   Japanese Patent Application Laid-Open No. 2020-12050
PTL 4
   Japanese Patent Application Laid-Open No. 2020-76082

### Summary of Invention

### Technical Problem

In any of conventional resin compositions, it is difficult to uniformly disperse wood powder or cellulose fibers, and there is a demand for further improving the dispersibility of those materials. In recent years, there is a demand for improving the dispersibility of nano-sized cellulose fibers in order to develop higher mechanical strength and/or resistance to impact (impact resistance).

However, nano-sized cellulose fibers have a large surface area, thus are difficult to be compatible with resins and tend to aggregate. Nano-sized cellulose fibers thus tend to increase the torque of a resin composition during melt-kneading (easily reduce workability), and it is also difficult to obtain sufficient mechanical strength. For uniformly dispersing nano-sized cellulose fibers, it is effective to weaken the hydrogen bonds between the cellulose fibers, and a compatibilizer for hydrophobizing cellulose fibers is essential.

The present invention has been made in view of the above problems. Specifically, an object of the present invention is to provide a resin composition in which cellulose fibers are uniformly dispersed and which has high mechanical strength and workability, and also provide a method for producing the resin composition.

### Solution to Problem

The present inventors have made intensive studies to solve the above problems. As a result, the present inventors have found that a resin composition having a specific composition can achieve the above object, and have completed the present invention.

The present invention provides resin compositions as follows.
[1] A resin composition, comprising:
   a propylene polymer (A); a cellulose fiber (B); and a maleic anhydride-modified polyolefin wax (C) obtained by grafting maleic anhydride to a polyolefin wax,
   in which
   when a total amount of the propylene polymer (A), the cellulose fiber (B), and the maleic anhydride-modified polyolefin wax (C) is 100 parts by mass, the resin composition contains 50 to 99.8 parts by mass of the propylene polymer (A), 0.1 to 49.9 parts by mass of the cellulose fiber (B), and 0.1 to 30 parts by mass of the maleic anhydride-modified polyolefin wax (C),
   the polyolefin wax is selected from the group consisting of an ethylene homopolymer, a copolymer of ethylene and an α-olefin having 3 to 12 carbon atoms, a propylene homopolymer, and a copolymer of propylene and ethylene or an α-olefin having 4 to 12 carbon atoms, and
   the maleic anhydride-modified polyolefin wax (C) satisfies requirements (i) to (iv) below:
      (i) a number average molecular weight (Mn) thereof in terms of polystyrene as measured by gel permeation chromatography (GPC) is 300 to 20,000,
      (ii) a softening point thereof as measured according to JIS K2207 is 70 to 160°C,
      (iii) a density thereof as measured by a density gradient tube method is 830 to 1,000 kg/m³, and
      (iv) an acid value thereof is 30 to 200 mgKOH/g.
[2] The resin composition according to [1], in which
   the propylene polymer (A) is at least one member selected from the group consisting of a propylene homopolymer, a propylene/ethylene copolymer, and a copolymer of propylene and an α-olefin having 4 to 12 carbon atoms.
[3] The resin composition according to [1] or [2], in which the number average molecular weight (Mn) of the maleic anhydride-modified polyolefin wax (C) is 2,000 to 6,000.
[4] The resin composition according to any one of [1] to [3], in which the polyolefin wax is a propylene homopolymer or a propylene/ethylene copolymer.
[5] The resin composition according to [4], in which the polyolefin wax is the propylene homopolymer.
[6] The resin composition according to any one of [1] to [5], in which in the maleic anhydride-modified polyolefin wax (C), the number of the maleic anhydride grafted to the polyolefin wax is 0.1 to 10 per molecule.
[7] The resin composition according to any one of [1] to [5], in which the acid value of the maleic anhydride-modified polyolefin wax (C) is 40 to 100 mgKOH/g.
[8] The resin composition according to any one of [1] to [7], in which the cellulose fiber (B) is a cellulose nanofiber.
[9] The resin composition according to any one of [1] to [7], in which between the maleic anhydride-modified polyolefin wax (C) and the cellulose fiber (B), a mass ratio (C)/(B) is 0.01 to 0.2.

The present invention provides a resin composition in which cellulose fibers are uniformly dispersed and which has high mechanical strength and workability.

### Description of Embodiment

Hereinafter, the present invention will be specifically described. In the following description, "to" indicating a numerical range represents a range from "equals to or more" to "equals to or less" unless otherwise specified.

The present inventors have found the following: using a specific maleic anhydride-modified polyolefin wax (C) as a compatibilizer can increase the compatibility (interfacial adhesion) between cellulose fibers (B) and a matrix resin, and reduces the aggregation of the cellulose fibers (B); and this effect is exhibited particularly effectively when a propylene polymer (A) is used as the matrix resin.

Although the reason for the advantageous effects is not clear, it can be presumed as follows. A specific maleic anhydride-modified polyolefin wax (C) having a certain acid value or higher (30 mgKOH/g or more), preferably a maleic anhydride-modified polypropylene wax having a low number average molecular weight (Mn) (preferably 6,000 or less), can sufficiently coat the surface of cellulose fibers (B) having a large surface area, and also has excellent affinity with a propylene polymer (A) serving as the matrix resin. Therefore, the cellulose fibers (B) and the matrix resin are sufficiently compatible (interfacial adhesion is increased), and aggregation of the cellulose fibers (B) can be reduced, so that both mechanical strength and workability can be achieved. The present invention will be described in detail below.

### 1. Resin Composition

A resin composition of the present invention contains a propylene polymer (A), cellulose fibers (B), and a maleic anhydride-modified polyolefin wax (C).

When the total amount of the propylene polymer (A), cellulose fibers (B), and maleic anhydride-modified polyolefin wax (C) in the resin composition of the present invention is 100 parts by mass, the content of the propylene polymer (A) is 50 to 99.8 parts by mass, preferably 55 to 90 parts by mass, and more preferably 60 to 80 parts by mass. For obtaining high workability, it is preferable that the content of the propylene polymer (A) is high.

When the total amount of the propylene polymer (A), cellulose fibers (B), and maleic anhydride-modified polyolefin wax (C) in the resin composition is 100 parts by mass, the content of the cellulose fibers (B) is 0.1 to 49.9 parts by mass, preferably 5 to 45 parts by mass, and more preferably 10 to 40 parts by mass. For obtaining high mechanical strength, it is preferable that the content of the cellulose fibers (B) is high.

When the total amount of the propylene polymer (A), cellulose fibers (B), and maleic anhydride-modified polyolefin wax (C) in the resin composition is 100 parts by mass, the content of the maleic anhydride-modified polyolefin wax (C) is 0.1 to 30 parts by mass, preferably 0.5 to 20 parts by mass, and more preferably 1 to 10 parts by mass. For obtaining high mechanical strength, it is preferable that the content of the maleic anhydride-modified polyolefin wax (C) is high.

The mass ratio (C)/(B) between the maleic anhydride-modified polyolefin wax (C) and the cellulose fibers (B) is not limited, but is preferably from 0.01 to 0.2, more preferably from 0.02 to 0.2, and even more preferably 0.05 to 0.15. A mass ratio (C)/(B) within the above range is more likely to increase the compatibility between the cellulose fibers (B) and the propylene polymer (A), further increase the interfacial adhesion therebetween, and also further increase the mechanical strength of the resin composition.

The components and physical properties of the resin composition will be described below.

### 1-1. Propylene Polymer (A)

A propylene polymer (A) is a propylene (co)polymer. The propylene (co)polymer is preferably a propylene homopolymer or a copolymer of propylene and ethylene or an α-olefin having 4 to 12 carbon atoms.

When the propylene polymer (A) is a copolymer of propylene and ethylene, the amount of constituent units derived from propylene is preferably 60 to 99.5 mol%. The amount of constituent units derived from propylene is preferably 80 to 99 mol%, more preferably 90 to 98.5 mol%, and even more preferably 95 to 98 mol%. The amount of constituent units derived from ethylene is preferably 0.5 to 40 mol%, more preferably 1 to 20 mol%, even more preferably 1.5 to 10 mol%, and further more preferably 2 to 5 mol%. The sum of the amount of constituent units derived from propylene and the amount of constituent units derived from ethylene is 100 mol%. Using a propylene (co)polymer having a large amount of propylene-derived constituent units improves the heat resistance, appearance, and mechanical strength of a resulting molded article.

When the propylene polymer (A) is a copolymer of propylene and an α-olefin having 4 to 12 carbon atoms, examples of the α-olefin having 4 to 12 carbon atoms include linear or branched α-olefins such as 1-butene, 1-pentene, 3-methyl-1-butene, 1-hexene, 4-methyl-1-pentene, 3-methyl-1-pentene, 1-octene, 1-decene, and 1-dodecene. Among the examples, 1-butene is particularly preferred. In addition, the propylene/α-olefin copolymer may further contain constituent units derived from an olefin other than those having 4 to 12 carbon atoms, for example, may contain a small amount (such as 10 mol% or less) of constituent units derived from ethylene. On the other hand, when the ethylene-derived constituent unit is not contained, the heat resistance and mechanical strength of a resulting molded article are more likely to be particularly well balanced. For the propylene (co)polymer, one type of α-olefin may be used, or two or more types thereof may be used in combination.

The amount of constituent units derived from propylene in the propylene/C4-C12 α-olefin copolymer is preferably 60 to 90 mol%, more preferably 65 to 88 mol%, even more preferably 70 to 85 mol%, and particularly preferably 75 to 82 mol%. The amount of constituent units derived from the α-olefin having 4 or more carbon atoms is preferably 10 to 40 mol%, more preferably 12 to 35 mol%, even more preferably 15 to 30 mol%, and particularly preferably 18 to 25 mol%. The sum of the amount of constituent units derived from propylene and the amount of constituent units derived from the α-olefin having 4 or more carbon atoms is 100 mol%.

When the composition of the propylene/C4-C12 α-olefin copolymer is within the above range, a molded article having excellent appearance can be obtained. Although the reason for this advantageous effect is not clear, it can be considered as follows: a resin composition having the above composition has a lowered crystallization rate; thus the flow time of the resin composition on a mold or in the cooling process is increased; and as a result, the surface of the molded article tends to become smooth. Further, when the composition is within the above range, the mechanical strength and heat resistance of the resulting molded article are improved.

The melting point (Tm) of the propylene/C4-C12 α-olefin copolymer as measured by a differential scanning calorimeter (DSC) is preferably 60 to 120°C, more preferably 65 to 100°C, and even more preferably 70 to 90°C.

The stereoregularity of the propylene polymer (A) is not limited, but the propylene polymer (A) preferably has a substantially syndiotactic structure. For example, when a propylene polymer (A) has a substantially syndiotactic structure, the molecular weight between entanglement points (Me) becomes small at the same molecular weight, and the entanglement of molecules increases. As a result, melt tension is increased, and thus dripping is less likely to occur. In addition, during the production of a molded article by using a resin composition containing the propylene polymer (A), the composition is more likely to adhere appropriately to a molding die or a roll. The propylene polymer (A) having a syndiotactic structure has a lower crystallization rate than a general propylene (co)polymer having an isotactic structure, thus cools slowly in a mold or rolls, thereby improving adhesion. As a result, it is presumed that the glossiness of the surface of the molded article is increased, and the abrasion resistance, scratch resistance, impact resistance, and the like are also increased.

The propylene polymer (A) having a substantially syndiotactic structure means that the peak area corresponding to 19.5 to 20.3 ppm in the ¹³C-NMR spectrum is 0.5% or more relative to the total peak area detected. When the syndiotacticity is within the above range, the crystallization rate becomes sufficiently low, and workability are significantly improved. In addition, a propylene (co)polymer, whose constituent units derived from propylene have a substantially syndiotactic structure, have much improved abrasion resistance and scratch resistance compared to general-purpose polyolefin resins such as polyethylene, block polypropylene, and isotactic polypropylene. A propylene polymer (A) having a syndiotactic structure can be produced by various known production methods.

The ratio (Mw/Mn) between the weight average molecular weight (Mw) and the number average molecular weight (Mn) of the propylene polymer (A) measured by gel permeation chromatography (GPC) is not limited. For example, Mw/Mn is preferably 6.0 or less. Mw/Mn is more preferably 4.0 or less, even more preferably 3.0 or less. Mw/Mn within the above range has the following advantages: the appearance, heat resistance, and mechanical strength become excellent because the amount of low molecular weight components that cause deterioration in physical properties is low; and the workability becomes excellent because the amount of high molecular weight substances that cause an increase in melt viscosity during kneading is low. Both the weight average molecular weight (Mw) and the number average molecular weight (Mn) are determined in terms of polystyrene.

The melting point (Tm) of the propylene polymer (A) measured by a differential scanning calorimeter (DSC) is preferably 250°C or less, or not observed. When a melting point is observed, the upper limit of the melting point is more preferably 230°C, even more preferably 200°C, and particularly preferably 170°C. In addition, the lower limit of the melting point is preferably 50°C, more preferably 70°C, even more preferably 90°C, particularly preferably 130°C, and particularly more preferably 150°C. When the melting point is within the above range, smoke, odor, and the like are less likely to be generated during the preparation of the resin composition by melt-kneading or during the production of a molded article by melt-molding. In addition, a molded article that is less sticky and has an excellent balance between heat resistance, mechanical strength, impact strength, and impact absorption can be obtained.

The glass transition temperature (Tg) of the propylene polymer (A) measured by a differential scanning calorimeter (DSC) is preferably -140 to 50°C, more preferably -120 to 20°C, and even more preferably -100 to -10°C. When the glass transition temperature is within the above range, the long-term stability, heat resistance, impact resistance, and mechanical strength of a resulting molded article are well balanced.

The density of the propylene polymer (A), which is measured according to the density gradient tube method in accordance with ISO 1183, is preferably in the range of 800 to 1,800 kg/m³. The lower limit of the density is more preferably 810 kg/m³, even more preferably 830 kg/m³, particularly preferably 860 kg/m³, and particularly more preferably 900 kg/m³. Moreover, the upper limit of the density is more preferably 1,300 kg/m³, further preferably 1,290 kg/m³, particularly preferably 1,270 kg/m³, more particularly more preferably 1,240 kg/m³, and even more preferably 1,200 kg/m³.

The flexural modulus of the propylene polymer (A) measured in accordance with JIS K7171:94 (ISO 178) is preferably 1 to 10,000 MPa. Herein, when the flexural modulus is 500 MPa or more, the flexural modulus is preferably 500 to 7,000 MPa, more preferably 700 to 5,000 MPa, particularly preferably 900 to 3,000 MPa, and even more preferably 1,000 to 2,300 MPa. When the flexural modulus falls within the above range, the workability of the resin composition becomes excellent, and the scratch resistance, heat resistance, and mechanical strength of the resulting molded article are also improved. When the flexural modulus is less than 500 MPa, the flexural modulus is preferably less than 300 MPa, more preferably less than 100 MPa, and even more preferably less than 50 MPa. When the flexural modulus is within the above range, a molded article having excellent flexibility and also excellent in properties of shock absorption, light weight, vibration absorption, vibration damping, and sound damping can be obtained. Furthermore, a molded article having excellent design properties such as mold transferability and emboss transferability, and surface gripping properties can be obtained.

### 1-2. Cellulose Fiber (B)

The type of cellulose fiber (B) is not limited as long as the cellulose fibers can be mixed with the propylene polymer (A) and the maleic anhydride-modified polyolefin wax (C), and a desired appearance and physical properties can be obtained. Examples of the cellulose fibers (B) include cellulose fibers and cellulose nanofibers. The resin composition may contain only one type of cellulose fiber (B), or may contain two or more types thereof. Depending on the purpose, wood powder may be used in place of the cellulose fiber (B).

The average fiber length of the cellulose fibers (B) (single fibers) is preferably 0.001 to 5 mm. When the average fiber length is 0.001 mm or more, the mechanical strength of a resulting molded article is more likely to be improved, and when the average fiber length is 5 mm or less, the dispersibility of the cellulose fibers (B) is less likely to be impaired. From the same point of view, the average fiber length of the cellulose fibers (B) is more preferably 0.01 to 3 mm. When the cellulose fibers (B) are aggregated, the average fiber length of the aggregates may be the same as above.

The average fiber diameter of the cellulose fibers (B) (single fibers) is preferably 10 µm or less, more preferably 5 µm or less. The lower limit of the average fiber diameter (single fiber) is not limited, but can be, for example, 10 nm. When the cellulose fibers (B) are aggregated, the average fiber diameter of the aggregates is preferably 2 mm or less, more preferably 1 mm or less.

The average fiber length and average fiber diameter of the cellulose fibers (B) can be obtained by the following: measuring the fiber lengths (or fiber diameters) of random 100 cellulose fibers from image data of a resin composition (for example, an injection-molded test piece) obtained by a scanning electron microscope (SEM), and using the average value thereof as the average fiber length (or average fiber diameter).

Such cellulose fibers (B) can be obtained by treating a cellulose-containing material selected from woods, pulps, paper, plant stems and leaves, and plant shells with a pulverizer. Specifically, after a cellulose-containing material is coarsely pulverized by using a cutting machine such as a shredder, the material is treated with an impact pulverizer or extruder, or dried. Agitating the treated material by using a medium-type pulverizer can obtain finely pulverized cellulose fibers.

For example, cellulose fibers can be obtained by cutting a raw material pulp, treating the material with hot water at 100°C or higher to hydrolyze the hemicellulose portion to make it brittle, and then fibrillating the treated material by a pulverization method with a high-pressure homogenizer, a microfluidizer, a ball mill, a disk mill, or the like.

Cellulose fibers made from such cellulose pulp or modified products thereof can be used as the cellulose fibers (B). In particular, modified products of cellulose fibers are preferably used from the viewpoints of stability, performance, and the like.

Examples of the modified products of cellulose fibers include those each modified with one or more modifiers selected from esterifying agents, silylating agents, isocyanate compounds, halogenated alkylating agents, and alkylene oxides and/or glycidyl compounds.

Examples of the esterifying agents include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid, and phenylacetic acid; mixtures of any compounds selected from above; and anhydrides from any compounds selected from above, such as symmetrical anhydrides (acetic anhydride, maleic anhydride, cyclohexane-carboxylic anhydride, benzene-sulfonic anhydride), mixed anhydride (butyricvaleric anhydride), and cyclic anhydrides (succinic anhydride, phthalic anhydride, naphthalene-1,8:4,5-tetracarboxylic dianhydride, cyclohexane-1,2,3,4-tetracarboxylic 3,4-anhydride), and ester anhydride (acetic acid 3-(ethoxycarbonyl)propanoic anhydride, benzoyl-ethyl carbonate).

Examples of the silylating agent include a Si-containing compound that have at least one reactive group capable of reacting with the hydroxyl groups on the surface of the cellulose fibers or groups thereof after the hydrolysis.

Examples of the silylating agents include chlorodimethylisopropylsilane, chlorodimethylbutylsilane, chlorodimethyloctylsilane, chlorodimethyldodecylsilane, chlorodimethyloctadecylsilane, chlorodimethylphenylsilane, chloro(1-hexenyl)dimethylsilane, dichlorohexylmethylsilane, dichloroheptylmethylsilane, trichlorooctylsilane, hexamethyldisilazane, 1,3-divinyl-1,1,3,3-tetramethyldisilazane, 1,3-divinyl-1,3-diphenyl-1,3-dimethyl-disilazane, 1,3-N-dioctyltetramethyl-disilazane, diisobutyltetramethyldisilazane, diethyltetramethyldisilazane, N-dipropyltetramethyldisilazane, N-dibutyltetramethyldisilazane, 1,3-di(para-t-butylphenethyl)tetramethyldisilazane, N-trimethylsilylacetamide, N-methyldiphenylsilylacetamide, N-triethylsilylacetamide, t-butyldiphenylmethoxysilane, octadecyldimethylmethoxysilane, dimethyloctylmethoxysilane, octylmethyldimethoxysilane, octyltrimethoxysilane, trimethylethoxysilane, and octyltriethoxysilane.

The halogenated alkylating agent may be an organic compound having at least one functional group capable of reacting with the hydroxyl groups on the surface of the cellulose fibers and halogenated alkylating the hydroxyl groups.

Examples of halogenated alkylating agents that can be used include chloropropane, chlorobutane, bromopropane, bromohexane, bromoheptane, iodomethane, iodoethane, iodooctane, iodooctadecane, and iodobenzene. In particular, bromohexane and iodooctane are preferably used from viewpoints of reactivity, stability, price, and the like.

The isocyanate compound may be an organic compound having at least one isocyanate group capable of reacting with the hydroxyl groups on the surface of the cellulose fibers. Further, the isocyanate compound may be a blocked isocyanate compound capable of regenerating the isocyanate group by elimination of the blocking group at a specific temperature, a dimer or trimer of polyisocyanate, a modified product such as biuret isocyanate, polymethylene polyphenyl polyisocyanate (polymeric MDI), or the like.

Examples of the isocyanate compounds include aliphatic polyisocyanates, alicyclic polyisocyanates, aromatic polyisocyanates, araliphatic polyisocyanates, blocked isocyanate compounds, and polyisocyanates. Examples of the isocyanate compounds include tetramethylene diisocyanate, dodecamethylene diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5-diisocyanate, 3-methylpentane-1,5-diisocyanate, isophorone diisocyanate, hydrogenated xylylene diisocyanate, 4,4'-dicyclohexylmethane diisocyanate, 1,4-cyclohexane diisocyanate, methylcyclohexylene diisocyanate, 1,3-bis(isocyanatomethyl)cyclohexane, tolylene diisocyanate (TDI), 2,2'-diphenylmethane diisocyanate, 2,4'-diphenylmethane diisocyanate, 4,4'-diphenylmethane diisocyanate (MDI), 4,4'-dibenzyl diisocyanate, 1,5-naphthylene diisocyanate, xylylene diisocyanate, 1,3-phenylene diisocyanate, 1,4-phenylene diisocyanate, dialkyldiphenylmethane diisocyanate, tetraalkyldiphenylmethane diisocyanate, and α,α,α,α-tetramethylxylylene diisocyanate. The examples also include blocked isocyanate compounds obtained from the above isocyanate compounds reacted with any one of oxime blocking agents, phenol blocking agents, lactam blocking agents, alcohol blocking agents, active methylene blocking agents, amine blocking agents, pyrazole blocking agents, bisulfite blocking agents, and imidazole blocking agents. In particular, TDI, MDI, hexamethylene diisocyanate, and blocked isocyanates made from modified hexamethylene diisocyanate and hexamethylene diisocyanate are preferably used from the viewpoints of reactivity, stability, price, and the like.

The alkylene oxide and/or glycidyl compound may be an organic compound having at least one alkylene oxide group, glycidyl group, and/or epoxy group each capable of reacting with the hydroxyl groups on the surface of the cellulose nanofibers.

Examples of the alkylene oxide and/or glycidyl compound include glycidyl ethers such as methyl glycidyl ether, ethyl glycidyl ether, butyl glycidyl ether, 2-ethylhexyl glycidyl ether, 2-methyloctyl glycidyl ether, phenyl glycidyl ether, p-tert-butylphenyl glycidyl ether, sec-butylphenyl glycidyl ether, n-butylphenyl glycidyl ether, phenylphenol glycidyl ether, cresyl glycidyl ether, and dibromocresyl glycidyl ether; glycidyl esters such as glycidyl acetate and glycidyl stearate; and polyhydric alcohol glycidyl ethers such as ethylene glycol diglycidyl ether, propylene glycol diglycidyl ether, 1,4-butanediol diglycidyl ether, hexamethylene glycol diglycidyl ether, resorcinol diglycidyl ether, bisphenol A diglycidyl ether, polyethylene glycol diglycidyl ether, polypropylene glycol diglycidyl ether, polybutylene glycol diglycidyl ether, glycerol triglycidyl ether, trimethylolpropane triglycidyl ether, pentaerythritol tetraglycidyl ether, sorbitol polyglycidyl ether, sorbitan polyglycidyl ether, polyglycerol polyglycidyl ether, and diglycerol polyglycidyl ether. In particular, 2-methyloctylglycidyl ether, hexamethylene glycol diglycidyl ether, and pentaerythritol tetraglycidyl ether are preferably used from the viewpoints of reactivity, stability, price, and the like.

### 1-3. Maleic Anhydride-Modified Polyolefin Wax (C)

A maleic anhydride-modified polyolefin wax (C) can function as a compatibilizer to facilitate compatibility between the propylene polymer (A) and the cellulose fibers (B). It should be noted that the maleic anhydride-modified polyolefin wax (C) is different from the propylene polymer (A).

As described above, simply adding cellulose fibers (B) to a propylene polymer (A) serving as the base of the resin composition may result in poor dispersibility of the cellulose fibers (B), which makes uniform kneading impossible. In particular, when the amount of the cellulose fiber (B) added with respect to the propylene polymer (A) is relatively large, or when the specific surface area of the cellulose fiber (B) is relatively large, the viscosity of the mixture increases during kneading, thereby making dispersion difficult in many cases. Therefore, when the resin composition is molded, the workability is more likely to deteriorate, and the uniformity of the molded article is more likely to become insufficient. As a result, the following disadvantages may be caused: insufficient mechanical strength, undesirable appearance, insufficient heat resistance, and flexibility (elongation) of a resulting molded article.

In this regard, the present inventors' study has found that during the kneading of the propylene polymer (A) and the cellulose fibers (B), adding a specific maleic anhydride-modified polyolefin wax (C), which is obtained by modifying a polyolefin wax with maleic anhydride and has a certain acid value or higher, can improve appearance, heat resistance, mechanical strength, flexibility, and workability of the resulting resin composition.

The detailed mechanism remains elusive, but when the molecular chain of the maleic anhydride-modified polyolefin wax (C) has a carboxyl group, the carboxyl group electrically interacts with the hydroxyl group in the molecule of the cellulose fiber (B), thereby increasing the affinity therebetween. In addition, the polyolefin wax portion of the maleic anhydride-modified polyolefin wax (C) has suitable compatibility with the propylene polymer (A). Therefore, the cellulose fibers (B) and the propylene polymer (A) are compatible with each other through the maleic anhydride-modified polyolefin wax (C), and thus the cellulose fibers (B) are more likely to be uniformly dispersed in the propylene polymer (A). As a result, it is presumed that the friction during kneading is reduced and the fluidity of the resin composition is improved. In addition, improving the fluidity of the resin composition improves the workability and also the appearance of the molded article. Furthermore, by virtue of the improved fluidity of the resin composition, structural destruction of the cellulose fibers (B) or aggregates thereof is less likely to occur, and a void wall is less likely to be formed at the interface between the cellulose fiber (B) and the propylene polymer (A) (i.e., interfacial adhesion increases). Therefore, sufficient mechanical strength is more likely to be obtained. These effects can be obtained more easily by using a maleic anhydride-modified polypropylene wax having a relatively low number average molecular weight (Mn).

### 1-3-1. Structure and Physical Properties

The maleic anhydride-modified polyolefin wax (C) is obtained by grafting maleic anhydride to a polyolefin wax. The polyolefin wax constituting the maleic anhydride-modified polyolefin wax (C) may be a polyethylene wax (ethylene homopolymer or copolymer of ethylene and α-olefin having 3 to 12 carbon atoms), or a propylene wax (propylene homopolymer or copolymer of propylene and ethylene or an α-olefin having 4 to 12 carbon atoms) from the viewpoint of easily obtaining affinity with the propylene polymer (A). In particular, from the viewpoint of increasing affinity with the propylene polymer (A), a propylene wax is preferred, and a propylene homopolymer is more preferred.

The maleic anhydride-modified polyolefin wax (C) preferably satisfies the following requirements (i) to (iv).
(i) The maleic anhydride-modified polyolefin wax (C) preferably has a number average molecular weight (Mn) in terms of polystyrene of 300 to 20,000 as measured by gel permeation chromatography (GPC). The upper limit of the number average molecular weight (Mn) is more preferably 15,000, even more preferably 10,000, further more preferably 6,000, and particularly preferably 5,000. In addition, the lower limit of the number average molecular weight (Mn) is more preferably 500, still more preferably 700, particularly preferably 1,000, and even more preferably 2,000. When the number average molecular weight of the maleic anhydride-modified polyolefin wax (C) is within the above range, the dispersibility of the cellulose fibers (B) in the resin composition is increased, and the appearance and mechanical strength of a resulting molded article are improved. Moreover, the workability of the resin composition is also improved. In particular, when the number average molecular weight is 6,000 or less (preferably 2,000 to 6,000), the molecular size of the wax is small, so that the surface of the cellulose fiber (B) having a large surface area can be sufficiently coated. Therefore, the dispersibility can be further improved, and the workability of the resin composition can be further improved.

The number average molecular weight (Mn) of the maleic anhydride-modified polyolefin wax (C) can be lowered by increasing the polymerization temperature during polymerization of the unmodified polyolefin wax described below or by increasing the hydrogen concentration during the polymerization. The number average molecular weight (Mn) may also be adjusted by adjusting the amount of catalyst used during polymerization of the unmodified polyolefin wax or refinement after polymerization.

In addition, the ratio (Mw/Mn) between the weight average molecular weight (Mw) and the number average molecular weight (Mn) of the maleic anhydride-modified polyolefin wax (C) measured by gel permeation chromatography (GPC) is not limited. Mw/Mn is preferably 9.0 or less, more preferably 8.0 or less, and even more preferably 7.0 or less. Mw/Mn within the above range has the advantages such that the appearance, heat resistance, and mechanical strength of a molded article obtained from the resin composition becomes excellent because the amount of low molecular weight components that would cause deterioration in physical properties is low. The weight average molecular weight (Mw) is also in terms of polystyrene.

The Mw/Mn of the maleic anhydride-modified polyolefin wax (C) can be adjusted by the type of catalyst, the polymerization temperature, and the like during the polymerization of the unmodified polyolefin wax. Ziegler-Natta catalysts and metallocene catalysts are generally used for the polymerization of unmodified polyolefin waxes, and metallocene catalysts are preferably used to obtain the desired Mw/Mn. The Mw/Mn of the maleic anhydride-modified polyolefin wax (C) may also be adjusted by refining the unmodified polyolefin wax.

(ii) The softening point of the maleic anhydride-modified polyolefin wax (C), as measured according to JIS K2207, is preferably 70 to 160°C. The upper limit of the softening point is more preferably 155°C, even more preferably 150°C. The lower limit of the softening point is more preferably 90°C, even more preferably 110°C. When the softening point is equal to or less than the upper limit, the workability of the resin composition is improved and the appearance, heat resistance and mechanical strength of a resulting molded article are also improved. In particular, the lower the softening point, the more preferable because during melt-kneading, the maleic anhydride-modified polyolefin wax (C) tends to melt prior to other components (e.g., the propylene polymer (A)), and thus more likely to coat the surface of the cellulose fibers (B). When the softening point is equal to or more than the lower limit, bleeding out of the maleic anhydride-modified polyolefin wax (C) in the resulting resin composition is more likely to be prevented.

The softening point of the maleic anhydride-modified polyolefin wax (C) can be adjusted by adjusting the composition of the unmodified polyolefin wax. For example, when the unmodified polyolefin wax described below is a copolymer of ethylene and an α-olefin, the softening point can be lowered by increasing the content of the α-olefin. Alternatively, the softening point may be adjusted by the type of catalyst or polymerization temperature during preparation of the unmodified polyolefin wax, or by refinement after polymerization.

(iii) The density of the maleic anhydride-modified polyolefin wax (C), as measured by the density gradient tube method according to JIS K7112, is preferably 830 to 1,000 kg/m³. The density is more preferably 860 to 980 kg/m³, even more preferably 890 to 960 kg/m³. When the density of the maleic anhydride-modified polyolefin wax (C) is within the above range, the dispersibility of the cellulose fibers (B) is increased, and the appearance and mechanical strength of the resulting molded article are improved. Moreover, the workability of the resin composition is also improved.

The density of the maleic anhydride-modified polyolefin wax (C) can be adjusted by adjusting the composition of the unmodified polyolefin wax described below, the polymerization temperature and/or the hydrogen concentration during polymerization, and the like.

(iv) The maleic anhydride-derived acid value of the maleic anhydride-modified polyolefin wax (C) is preferably 30 to 200 mgKOH/g, more preferably 30 to 150 mgKOH/g, even more preferably 30 to 120 mgKOH/g, still more preferably 40 to 100 mgKOH/g, and particularly preferably 40 to 90 mgKOH/g. When the maleic anhydride-derived acid value of the maleic anhydride-modified polyolefin wax (C) is equal to or more than the lower limit, the compatibility between the maleic anhydride-modified polyolefin wax (C) and the cellulose fibers (B) is more likely to be improved. When the acid value is equal to or less than the upper limit, excessive interaction that causes viscosity increase or the like is more likely to be prevented. Therefore, the workability of the resin composition is improved, and the appearance, heat resistance, and mechanical strength of the resulting molded article are well balanced.

The maleic anhydride-derived acid value can be determined by titration, elemental analysis, or NMR. Specifically, the acid value can be measured in accordance with JIS K5902.

(v) In the maleic anhydride-modified polyolefin wax (C), the number of maleic anhydride groups grafted to a polyolefin wax is preferably 0.1 to 10 per molecule. When the number of maleic anhydride groups is within the above range, the compatibility between the propylene polymer (A) and the cellulose fibers (B) is more likely to increase without excessively increasing the torque during melt-kneading of the resin composition. The number of maleic anhydride groups can be calculated from the number average molecular weight (Mn) and the acid value.

The number of maleic anhydride groups grafted per molecule can be adjusted, for example, by adjusting the acid value or the number average molecular weight (Mn).

### 1-3-2. Production Method

The maleic anhydride-modified polyolefin wax (C) can be obtained by modifying a polyolefin wax (unmodified polyolefin wax) with maleic anhydride.

In the following, an unmodified polyolefin wax and a method for preparing the unmodified polyolefin wax will be described first, and then a method for preparing the maleic anhydride-modified polyolefin wax by using the unmodified polyolefin wax will be described.

### Unmodified Polyolefin Wax

The unmodified polyolefin wax is preferably polyethylene wax or propylene wax.

### - Polyethylene Wax

As the polyethylene wax, a polyethylene wax as described in, for example, Japanese Patent Application Laid-Open No. 2009-144146 is preferred, which will be briefly described below.

The polyethylene wax may be, for example, an ethylene homopolymer or a copolymer of ethylene and an α-olefin having 3 to 12 carbon atoms. Specific examples of the ethylene homopolymer include high density polyethylene wax, medium density polyethylene wax, low density polyethylene wax, and linear low density polyethylene wax.

When the polyethylene wax is a copolymer of ethylene and an α-olefin having 3 to 12 carbon atoms, the amount of constituent units derived from ethylene is preferably 91.0 to 99.9 mol%, more preferably 93.0 to 99.9 mol%, even more preferably 95.0 to 99.9 mol%, and particularly preferably 95.0 to 99.0 mol%. The amount of constituent units derived from the α-olefin having 3 or more carbon atoms is preferably 0.1 to 9.0 mol%, preferably 0.1 to 7.0 mol%, more preferably 0.1 to 5.0 mol%, and particularly preferably 1.0 to 5.0 mol%. The sum of the amount of constituent units derived from ethylene and the amount of constituent units derived from the α-olefin having 3 or more carbon atoms is 100 mol%. The ratio of constituent units of the polyethylene wax can be determined by analysis of ¹³C-NMR spectrum.

Examples of the α-olefin (having 3 to 12 carbon atoms) to be copolymerized with ethylene include linear or branched α-olefins such as propylene, 1-butene, 1-pentene, 3-methyl-1-butene, 1-hexene, 4-methyl-1-pentene, 3-methyl-1-pentene, 1-octene, 1-decene, and 1-dodecene. Propylene, 1-butene, 1-hexene, 4-methyl-1-pentene, and 1-octene are preferred, α-olefins having 3 to 8 carbon atoms are more preferred, propylene and 1-butene are particularly preferred, and propylene is more particularly preferred. Copolymerization of ethylene with propylene or 1-butene tends to make the maleic anhydride-modified polyolefin wax (C) harder and less sticky. Therefore, the properties of the surface of a resulting molded article are improved. These components are also preferred from the view point of increasing the mechanical strength and heat resistance of the resulting molded article. Although the reason for this advantageous effect is not clear, propylene or 1-butene effectively lowers the melting point at a small amount during copolymerization compared to other α-olefins. Therefore, the crystallinity tends to become higher when compared at the same melting point, and this is presumed to be the reason for the advantageous effect. The α-olefins to be copolymerized with ethylene may be used singly or in combination of two or more.

### - Polypropylene Wax

The polypropylene wax is a propylene homopolymer, a copolymer of propylene and ethylene, or a copolymer of propylene and an α-olefin having 4 to 12 carbon atoms.

When the polypropylene wax is a copolymer of propylene and ethylene, the amount of constituent units derived from propylene is preferably 60 to 99.5 mol%. The amount of constituent units derived from propylene is more preferably 80 to 99 mol%, even more preferably 90 to 98.5 mol%, and particularly preferably 95 to 98 mol%. The amount of constituent units derived from ethylene is preferably 0.5 to 40 mol%, more preferably 1 to 20 mol%, even more preferably 1.5 to 10 mol%, and particularly preferably 2 to 5 mol%. The sum of the amount of constituent units derived from propylene and the amount of constituent units derived from ethylene is 100 mol%. The use of such a polypropylene wax is more likely to obtain a molded article having an excellent balance of appearance, mechanical strength, and heat resistance.

When the polypropylene wax is a copolymer of propylene and an α-olefin having 4 to 12 carbon atoms, examples of the α-olefin having 4 to 12 carbon atoms include linear or branched α-olefins such as 1-butene, 1-pentene, 3-methyl-1-butene, 1-hexene, 4-methyl-1-pentene, 3-methyl-1-pentene, 1-octene, 1-decene, and 1-dodecene. In particular, 1-butene is particularly preferred.

The amount of constituent units derived from propylene in the propylene/C4-C12 α-olefin copolymer is preferably 60 to 90 mol%, more preferably 65 to 88 mol%, even more preferably 70 to 85 mol%, and particularly preferably 75 to 82 mol%. The amount of constituent units derived from the α-olefin having 4 or more carbon atoms is preferably 10 to 40 mol%, more preferably 12 to 35 mol%, even more preferably 15 to 30 mol%, and particularly preferably 18 to 25 mol%. The sum of the amount of constituent units derived from propylene and the amount of constituent units derived from the α-olefin having 4 or more carbon atoms is 100 mol%.

In particular, a polypropylene wax is preferred, a propylene homopolymer or a copolymer of propylene and ethylene is more preferred, and a propylene homopolymer is even more preferred. Maleic anhydride-modified products obtained from these polypropylene waxes have a higher compatibility with the propylene polymer (A), and the appearance, mechanical strength, and heat resistance of the resulting molded article are well balanced. Moreover, the workability of the resin composition is also improved.

### - Method for Preparing Unmodified Polyolefin Wax

An unmodified polyolefin wax may be obtained by directly polymerizing ethylene, propylene, 4-methyl-1-pentene, or the like, or by preparing a high molecular weight (co)polymer and thermally decomposing the (co)polymer. For thermally decomposing, it is preferable to perform the thermal decomposition at 300 to 450°C for 5 minutes to 10 hours. In this case, unsaturated ends are generated in the unmodified polyolefin wax. When the number of vinylidene groups (unsaturated ends) per 1000 carbon atoms as measured by ¹H-NMR is 0.5 to 5, the affinity between the propylene polymer (A) and the cellulose fiber (B) is more likely to increase. The unmodified polyolefin wax may be refined by a method such as solvent fractionation that performs fractionation based on the difference in solubility in a solvent, distillation, or the like.

For obtaining an unmodified polyolefin wax by directly polymerizing ethylene, propylene, 4-methyl-1-pentene or the like, the method therefor is not limited. Various known production methods can be applied, and for example, ethylene or the like may be polymerized with a Ziegler/Natta catalyst or a metallocene catalyst.

### - Method for Preparing Maleic Anhydride-Modified Polyolefin Wax (C)

The maleic anhydride-modified polyolefin wax (C) is obtained by modifying the above unmodified polyolefin wax with maleic anhydride.

The modification method that uses maleic anhydride is not limited. For example, a method in which an unmodified polyolefin wax as a raw material and maleic anhydride are melt-kneaded in the presence of a polymerization initiator such as an organic peroxide may be used. Alternatively, a method in which a polymerization initiator such as an organic peroxide is added to a solution obtained by dissolving an unmodified polyolefin wax as a raw material and maleic anhydride in an organic solvent, followed by melt-kneading may be used.

Known devices such as an autoclave, Henschel mixer, V-type blender, tumbler blender, ribbon blender, single-screw extruder, multi-screw extruder, kneader, and Banbury mixer can be used for melt-kneading. In particular, using a batch-type melt-kneading apparatus with excellent melt-kneading performance, such as an autoclave, can obtain a maleic anhydride-modified polyolefin wax (C) in which each component is uniformly dispersed and reacted. In addition, compared with a continuous type, the batch type is preferable from the viewpoint that it is relatively easy to increase the modification rate and the modification efficiency because the residence time can be easily adjusted and also can be increased.

After the unmodified polyolefin wax is modified with maleic anhydride, the resultant may be processed according to the method for producing the resin composition. For example, the maleic anhydride-modified polyolefin wax (C) may be processed into powder, tablets, or blocks. Alternatively, the maleic anhydride-modified polyolefin wax (C) may be dispersed or dissolved in water or an organic solvent. Any method may be used for dissolving or dispersing the maleic anhydride-modified polyolefin wax (C) in water or an organic solvent. For example, the maleic anhydride-modified polyolefin wax (C) may be dissolved or dispersed by stirring. The maleic anhydride-modified polyolefin wax (C) may be heated while stirred.

Further, the maleic anhydride-modified polyolefin wax (C) may be microparticulated by dissolving or dispersing the wax in water or an organic solvent and then precipitating the wax. An example of the method for microparticulating the maleic anhydride-modified polyolefin wax (C) is as follows. First, the composition of a solvent is adjusted so that the maleic anhydride-modified polyolefin wax (C) would precipitate at 60 to 100°C. Then, the mixture of the solvent and maleic anhydride-modified polyolefin wax (C) is heated to dissolve or disperse the maleic anhydride-modified polyolefin wax (C) in the solvent. The solution is then cooled at an average cooling rate of 1 to 20°C/hour (preferably 2 to 10°C/hour) to precipitate the maleic anhydride-modified polyolefin wax (C). Thereafter, a poor solvent may be added to further promote the precipitation.

### 1-4. Optional Component

The resin composition of the present invention may further contain one or more optional components as long as the objects and effects of the present invention are not impaired. Examples of the optional components include flame retardants such as brominated bisphenol, brominated epoxy resin, brominated polystyrene, brominated polycarbonate, triphenyl phosphate, phosphonic acid amide, and red phosphorus; flame retardant aids such as antimony trioxide and sodium antimonite; heat stabilizers such as phosphates and phosphites; antioxidants such as hindered phenols; heat resistant agents; weathering agents; light stabilizers; release agents; flow modifiers; colorants; lubricants; antistatic agents; crystal nucleating agents; plasticizers; and forming agents.

The content of the optional components in the resin composition of the present invention is preferably 30 parts by mass or less, more preferably 20 parts by mass or less, and particularly preferably 10 parts by mass or less based on a total of 100 parts by mass of the propylene polymer (A), the cellulose fibers (B), and the maleic anhydride-modified polyolefin wax (C).

### 2. Method for Producing Resin Composition

Various methods may be used for producing the resin composition of the present invention. For example, the following method may be used: mixing the propylene polymer (A), the cellulose fibers (B), the maleic anhydride-modified polyolefin wax (C), and one or more optional components simultaneously or in any order with a tumbler, V-type blender, Nauta mixer, Banbury mixer, kneading roll, single-screw or twin-screw extruder, or the like. The resin composition of the present invention may be produced by melt-kneading the propylene polymer (A), the cellulose fibers (B), the maleic anhydride-modified polyolefin wax (C), and one or more optional components, and then diluting the melt in the propylene polymer (A).

The following is also possible: after impregnating the cellulose fibers (B) with the maleic anhydride-modified polyolefin wax (C), these components may be mixed with the propylene polymer (A). Any method may be used for impregnating the cellulose fibers (B) with the maleic anhydride-modified polyolefin wax (C). For example, the following method is possible: while the molten maleic anhydride-modified polyolefin wax (C) and the cellulose fibers (B) are in contact with each other, tension is applied to the cellulose fibers (B) with a roll or a bar, the cellulose fibers (B) are repeatedly spread and bundled, or pressure or vibration is applied to the cellulose fibers (B). According to these methods, even the inside of the cellulose fibers (B) can be impregnated with the maleic anhydride-modified polyolefin wax (C).

### 3. Application

The resin composition of the present invention is molded by, for example, injection molding, blow molding, inflation molding, cast film molding, extrusion molding such as profile extrusion molding, or compression molding, and is used as a molded article. Among these molding methods, the injection molding method is preferred from the viewpoint of design properties and moldability.

The resin composition of the present invention is used to produce molded articles for a wide range of applications from household goods to industrial goods. Examples of the applications include electrical components, electronic components, automotive components, machine mechanical components, food containers, films, sheets, and fibers. Specific examples thereof include business and OA equipment such as printers, personal computers, word processors, keyboards, PDA (personal digital assistants), telephones, cell phones, smartphones, tablet terminals, WiFi routers, facsimile machines, copying machines, ECR (electronic cash registers), electronic calculators, electronic notebooks, electronic dictionaries, cards, holders, and stationery; household electrical appliances such as laundry machines, refrigerators, cleaners, microwave ovens, lighting equipment, game machines, irons, and kotatsu (Japanese foot warmer); AV equipment such as TV, VTR, video cameras, digital cameras, single lens reflex cameras, mobile audio terminals, radio cassette recorders, tape recorders, mini discs, CD players, speakers, and liquid crystal displays; and electrical/electronic components and telecommunication equipment such as connectors, relays, condensers, switches, printed circuit boards, coil bobbins, semiconductor sealing materials, electrical wires, cables, transformers, deflecting yokes, distribution boards, and clocks.

In addition, examples of the applications also include materials for automobiles, vehicles, ships, aircraft, and construction, such as seats (including paddings and outer materials), belts, ceiling coverings, convertible tops, arm rests, door trims, rear package trays, carpets, mats, sun visors, wheel covers, tires, mattress covers, air bags, insulation materials, hangers, hand straps, electrical wire-sheathing materials, electrical insulating materials, paints, coating materials, overlaying materials, floor materials, corner walls, deck panels, covers, plywood, ceiling boards, partition plates, side walls, carpets, wall papers, wall covering materials, exterior materials, interior materials, roofing materials, sound insulating panels, thermal insulating panels, and window materials; and daily and sporting goods, such as clothing, curtains, sheets, plywood, laminated fiber boards, carpets, entrance mats, sheets, buckets, hoses, containers, glasses, bags, cases, goggles, skis, rackets, tents, and musical instruments.

Furthermore, examples of the applications also include bottles for shampoo, detergent, cosmetic, or the like, seasoning bottles for edible oils, soy sauce, or the like, beverage bottles for mineral water, juice, or the like, heat resistant food containers such as lunch boxes and bowls for chawanmushi (Japanese steamed egg custard), tableware such as dishes and chopsticks, various other food containers, packaging films, packaging bags, toothbrushes, and knife handles.

In particular, the resin composition is particularly suitable for applications requiring mechanical strength, such as automotive components.

### Examples

The present invention will be described in detail based on Examples, but the present invention is not limited to the following Examples.

### 1. Resin

Propylene polymer (A): PP (trade name J107G, MFR 30 g/10 min, density 910 kg/m³) manufactured by Prime Polymer Co., Ltd. was used.

High-density polyethylene (for comparison): HDPE (trade name 7000F, MFR 0.04 g/10 min, density 950 kg/m³) manufactured by Prime Polymer Co., Ltd. was used.

The physical properties of the resins were measured under the following conditions.

### MFR

MFR was measured at 230°C under a load of 2.16 kg in accordance with JIS K7210.

### Density

Density was measured in accordance with JIS K7112.

### 2. Cellulose fiber

A mechanically pulverized crude pulp and water were placed into a pressure-resistant autoclave and heated at 130°C for 5 hours to obtain a refined pulp. The refined pulp is beaten with a disc refiner, defibrated with a high-pressure homogenizer (internal pressure: 100 MPa), dried with a hot air oven, thereby obtaining cellulose fibers (B) (cellulose nanofibers).

When the obtained cellulose fibers (B) were observed as image data captured by a scanning electron microscope (SEM), the average fiber diameter of aggregates of cellulose fibers (B) was 1 mm and the average fiber length thereof was 2 to 3 mm.

### 3. Compatibilizer

### 3-1. Preparation of Maleic Anhydride-Modified Polyolefin Wax (C)

### Production example 1

A maleic anhydride-modified polyolefin wax (W1) was prepared according to the following methods (1) to (3).

### (1) Preparation of catalyst

In a glass autoclave having an internal volume of 1.5 liters, 25 g of commercially available anhydrous magnesium chloride was suspended in 500 ml of hexane. This suspension was maintained at 30°C, and 92 ml of ethanol was added dropwise over 1 hour while stirring, and the reaction was allowed to proceed for 1 hour. Subsequently, 93 ml of diethylaluminum monochloride was added dropwise over 1 hour, and the reaction was further continued for 1 hour. Thereafter, 90 ml of titanium tetrachloride was added dropwise, the temperature of the reaction vessel was raised to 80°C, and the reaction was allowed to proceed for 1 hour. The solid portion was then washed with hexane by decantation until free titanium was no longer detected. Thereafter, the solid content (catalyst) was suspended in hexane-the titanium concentration thereof was quantified by titration-and provided for the preparation of an unmodified polyolefin wax.

### (2) Preparation of unmodified polyolefin wax

Into a stainless steel autoclave having an internal volume of 2 liters, which was sufficiently purged with nitrogen, 930 ml of hexane and 70 ml of propylene were charged and hydrogen was introduced until the gauge pressure reached 20.0 kg/cm². After raising the temperature in the system to 170°C, 0.1 mmol of triethylaluminum, 0.4 mmol of ethylaluminum sesquichloride, and a hexane suspension of the catalyst obtained by the above method were injected with ethylene so that the amount of the titanium component was 0.008 mmol in terms of atoms to initiate polymerization.

Thereafter, only ethylene was continuously supplied to keep the total pressure at 40 kg/cm² (gauge pressure), and polymerization was continued at 170°C for 40 minutes. A small amount of ethanol was then added to the system to terminate the polymerization, and unreacted ethylene and propylene were purged. The resulting polymer solution was dried overnight at 100°C under reduced pressure to obtain an unmodified polyolefin wax.

### (3) Maleic anhydride modification of unmodified polyolefin wax

Into a glass reactor, 200 g of the unmodified polyolefin wax obtained by the above method was placed, and melted under a nitrogen atmosphere at 170°C. Then, 10 g of maleic anhydride and 2.2 g of di-t-butyl peroxide (hereinafter also referred to as "DTBPO") were continuously supplied to the reaction system (at temperature of 170°C) over 5 hours. After heat reaction for 1 hour, still in a molten state, volatile component was removed by degassing in a vacuum of 10 mmHg for 0.5 hour. Thereafter, the reactant was cooled to obtain a maleic anhydride-modified polyolefin wax (C1).

### Production example 2

A maleic anhydride-modified polyolefin wax (C2) was prepared in the same manner as in Production example 1, except that the amounts of di-t-butyl peroxide and maleic anhydride to be reacted were adjusted to change the Mn and acid value as shown in Table 1.

### Production example 3

A maleic anhydride-modified polyolefin wax (C3) was prepared in the same manner as in Production example 1, except that the amount of di-t-butyl peroxide was adjusted to change the Mn as shown in Table 1.

### Production example 4

A maleic anhydride-modified polyolefin wax (C4) was prepared in the same manner as in Production example 1, except that the amount of di-t-butyl peroxide was adjusted to change the Mn as shown in Table 1.

### Production example 5

An unmodified polyolefin wax was prepared by adjusting the amounts of ethylene and propylene. A maleic anhydride-modified polyolefin wax (C5) was then prepared by modifying the unmodified polyolefin wax with maleic anhydride in the same manner as in Production example 1, except that the amounts of di-t-butyl peroxide and maleic anhydride were adjusted to change the acid value as shown in Table 1.

### Production example 6

PP (trade name J107G, MFR 30 g/10 min, density 910 kg/m³) manufactured by Prime Polymer Co., Ltd. was placed into an autoclave and heated at 380°C for 3 hours under a nitrogen atmosphere to prepare an unmodified polyolefin wax. A maleic anhydride-modified polyolefin wax (C6) was then prepared by modifying the unmodified polyolefin wax with maleic anhydride in the same manner as in Production example 1.

### Production example 7

PP (trade name J107G, MFR 30 g/10 min, density 910 kg/m³) manufactured by Prime Polymer Co., Ltd. was placed into an autoclave and heated at 380°C for 2 hours under a nitrogen atmosphere to prepare an unmodified polyolefin wax. A maleic anhydride-modified polyolefin wax (C7) was then prepared by modifying the unmodified polyolefin wax with maleic anhydride in the same manner as in Production example 1.

### Production example 8

An unmodified polyolefin wax was prepared in the same manner as in Production example 1, except that only ethylene was supplied as a polymerization component. A maleic anhydride-modified polyolefin wax (C8) was then prepared by modifying the unmodified polyolefin wax with maleic anhydride in the same manner as in Production example 1.

### 3-2. Preparation of Polyolefin Wax for Comparison

### Production example 9

An unmodified polyolefin wax (W1) was prepared in the same manner as in Production example 1, except that the degree of polymerization of propylene and ethylene was adjusted.

### Production example 10

An unmodified polyolefin wax (W2) was prepared in the same manner as in Production example 1, except that the degree of polymerization of propylene and ethylene was adjusted.

### Production example 11

An unmodified polyolefin wax (W3) was prepared in the same manner as in Production example 1, except that the degree of polymerization of propylene and ethylene was adjusted.

### Production example 12

PP (trade name J107G, MFR 30 g/10 min, density 910 kg/m³) manufactured by Prime Polymer Co., Ltd. was placed into an autoclave and heated at 380°C for 2 hours under a nitrogen atmosphere to prepare an unmodified polyolefin wax. A maleic anhydride-modified polyolefin wax (W4) was then prepared by modifying the unmodified polyolefin wax with maleic anhydride in the same manner as in Production example 1.

### Production example 13

A maleic anhydride-modified polyolefin wax (W5) was prepared in the same manner as in Production example 12, except that the amounts of di-t-butyl peroxide and maleic anhydride to be reacted were adjusted to change the Mn and acid value as shown in Table 1.

### Production example 14

A maleic anhydride-modified polyolefin wax (W6) was prepared in the same manner as in Production example 12, except that the amounts of di-t-butyl peroxide and maleic anhydride to be reacted were adjusted to change the Mn and acid value as shown in Table 1.

### 3-3. Measurement of Physical Properties

The physical properties of the maleic anhydride-modified polyolefin waxes (C1) to (C8) and the comparative polyolefin waxes (W1) to (W6) were measured by the following methods.

### Composition

The amount of constituent units of each component of each wax (composition ratio of ethylene and propylene) was determined by analysis of ¹³C-NMR spectrum measured under the following conditions.

### Measurement Conditions of ¹³C-NMR

Apparatus: AVANCE III cryo-500 nuclear magnetic resonance apparatus manufactured by Bruker BioSpin Corp.
Nucleus measured: ¹³C (125 MHz)
Measurement mode: single pulse proton broadband decoupling
Pulse width: 45° (5.00 µsec)
Number of points: 64k
Measurement range: 250 ppm (-55 to 195 ppm)
Repetition time: 5.5 seconds
Cumulative number: 128
Measurement solvent: ortho-dichlorobenzene/benzene-d₆ (4/1 (volume ratio))
Sample concentration: 60 mg/0.6 mL
Measurement temperature: 120°C
Window function: exponential (BF: 1.0 Hz)
Chemical shift reference: δδ signal 29.73 ppm

### Number average molecular weight (Mn)

The number average molecular weight (Mn) was determined from GPC measurement. The measurement was performed under the following conditions. The number average molecular weight (Mn) was determined from a calibration curve with commercially available monodisperse standard polystyrene.
Apparatus: Gel permeation chromatograph Alliance GPC2000 (manufactured by Waters Corporation)
Solvent: o-dichlorobenzene
Columns: TSKgel GMH6-HT × 2 and TSKgel GMH6-HTL column × 2 (both manufactured by Tosoh Corporation)
Flow rate: 1.0 ml/min
Sample: 0.15 mg/mL o-dichlorobenzene solution
Temperature: 140°C

### Softening point

The softening point was measured in accordance with JIS K2207

### Density

The density was measured in accordance with JIS K7112

### Acid value

The acid value was measured in accordance with JIS K5902

### Number of maleic anhydride groups per molecule

The number of grafted maleic anhydride groups per molecule was calculated from the number average molecular weight (Mn) and the acid value.

Table 1 shows the measurement results.

**Table 1**

| No. | Molecular structure | Molecular weight Mn | Softening point | Density | Acid value | M Number | Remark |
|---|---|---|---|---|---|---|---|
| | | | [°C] | [kg/m³] | [mgKOH/g] | [per molecule] | |
| C1 | Acid modified C3C2 copolymer | 7,500 | 143 | 920 | 45 | 3.0 | (C) component |
| C2 | Acid modified C3C2 copolymer | 8,100 | 142 | 930 | 80 | 5.8 | |
| C3 | Acid modified C3C2 copolymer | 6,100 | 138 | 920 | 45 | 2.5 | |
| C4 | Acid modified C3C2 copolymer | 4,600 | 136 | 920 | 47 | 1.9 | |
| C5 | Acid modified C2C3 copolymer | 1,200 | 108 | 940 | 60 | 0.6 | |
| C6 | Acid modified C3 polymer | 5,500 | 148 | 930 | 46 | 2.3 | |
| C7 | Acid modified C3 polymer | 6,200 | 149 | 930 | 56 | 3.1 | |
| C8 | Acid modified C2 polymer | 1,100 | 113 | 950 | 57 | 0.6 | |
| W1 | C3C2 copolymer | 4,100 | 150 | 900 | 0 | 0.0 | For comparison |
| W2 | C3C2 copolymer | 3,400 | 147 | 900 | 0 | 0.0 | |
| W3 | C3C2 copolymer | 14,000 | 158 | 900 | 0 | 0.0 | |
| W4 | Acid modified C3 polymer | 29,000 | 162 | 920 | 33 | 8.6 | |
| W5 | Acid modified C3 polymer | 37,000 | 171 | 940 | 51 | 16.9 | |
| W6 | Acid modified C3 polymer | 47,000 | 175 | 940 | 43 | 18.1 | |

### 4. Preparation of Resin Composition

### Example 1

Using a co-rotating twin screw extruding machine HK25D (manufactured by Parker Corporation: ϕ25 mm, LID = 41), 67 parts by mass of the propylene polymer (A), 30 parts by mass of the cellulose fibers (B), and 3 parts by mass of maleic anhydride-modified polyolefin wax (C1) were melt kneaded, and extruded at a cylinder temperature of 210°C to obtain a pelletized resin composition.

### Examples 2 to 13 and Comparative Examples 1 to 10

Resin compositions were obtained in the same manner as in Example 1, except that the types and amounts of the components to be blended were changed to the compositions shown in Table 2 or 3.

### 5. Evaluation of Resin Composition

The resin compositions of Examples 1 to 13 and Comparative Examples 1 to 10 were evaluated as follows.

### Torque

The steady torque was measured during pelletizing an obtained resin composition with a twin-screw extruder, and the average value was calculated. The following criteria were used for the evaluation.
Excellent: Average torque value is less than 10 N·m
Good: Average torque value is 10N·m or more and less than 11N·m
Fair: Average torque value is 11N·m or more and less than 12N·m
Poor: Average torque value is 12N·m or more

### Tensile strength and tensile modulus

The pellets of each obtained resin composition were dried at 120°C for 8 hours, and then injection molded by using an injection molding machine (Niigata NN100, manufactured by Niigata Machine Techno Co., Ltd.) to produce a test piece under the conditions of cylinder temperature of 210°C, screw speed of 60 rpm, injection pressure of 130 MPa, and mold temperature of 60°C. The test piece had a shape conforming to JIS K7161.

The injection-molded test piece (ISO universal test piece) was used for performing a tensile test according to JIS K7161 under the conditions of a distance between chucks of 115 mm and a testing rate of 50 mm/min to measure tensile strength and tensile modulus.

The following criteria were used for the evaluation of the tensile strength.
Excellent: Tensile strength is 35 MPa or more
Good: Tensile strength is 30 MPa or more and less than 35 MPa
Fair: Tensile strength is 25 MPa or more and less than 30 MPa
Poor: Tensile strength is less than 25 MPa

The following criteria were used for the evaluation of the tensile modulus.
Excellent: Tensile modulus is 2,200 MPa or more
Good: Tensile modulus is 2,000 MPa or more and less than 2,200 MPa
Fair: Tensile modulus is 1,800 MPa or more and less than 2,000 MPa
Poor: Tensile modulus is less than 1,800 MPa

### Interfacial adhesion

The cross section of the pellets of each obtained resin composition was observed with a scanning electron microscope (SEM) at a magnification of 1,000. The following criteria were used for the evaluation of the interfacial adhesion between the cellulose fiber (B) and the resin.
Good: 95% or more of the entire interface is in close contact
Fair: 90% or more and less than 95% of the entire interface is in close contact
Poor: Less than 90% of the entire interface is in close contact

Table 2 shows the evaluation results of Examples 1 to 13, and Table 3 shows the evaluation results of Comparative Examples 1 to 10. When all of the above evaluations were "Fair" or higher, it was determined to be acceptable.

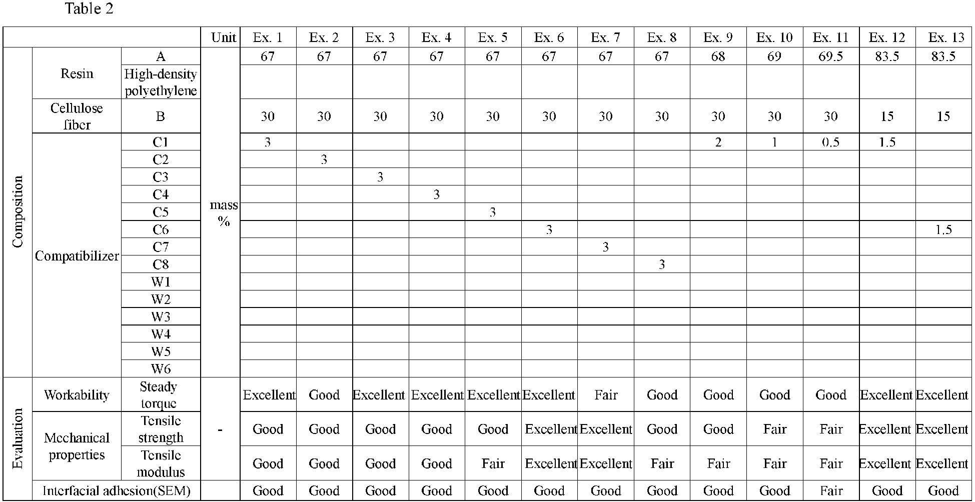

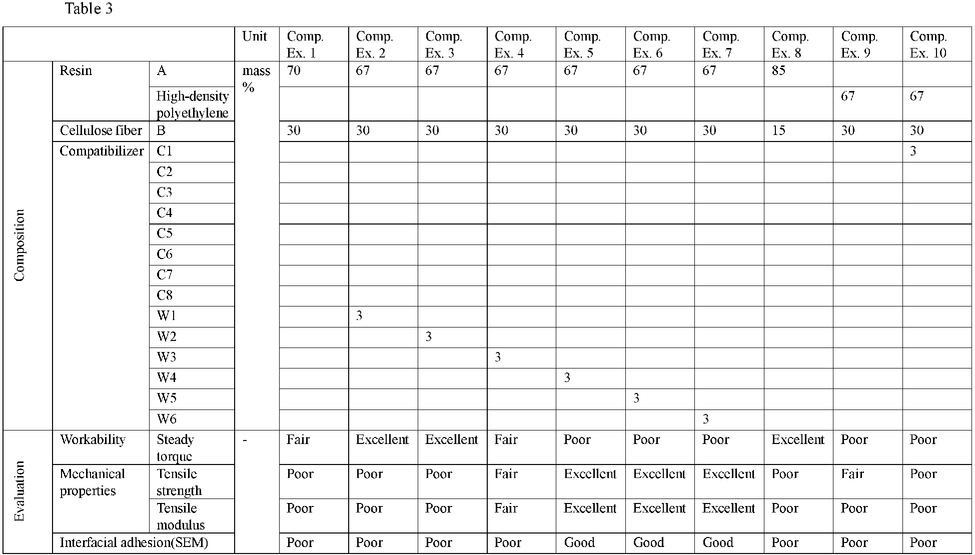

Table 2 shows that each of the resin compositions of Examples 1 to 13, which contains a propylene polymer (A), cellulose fibers (B), and a specific maleic anhydride-modified polyolefin wax (C), is excellent in both workability and mechanical strength.

On the other hand, each of the resin compositions of Comparative Examples 1, 8 and 9, which contains no compatibilizer, and each of the resin compositions of Comparative Examples 2 and 3, which contains unmodified olefin wax as a compatibilizer, have low tensile strength. In addition, the resin composition of Comparative Example 4 has both low torque and low tensile strength. The reason for those insufficiencies is considered to be the cellulose fibers and the resin being not compatible with each other and resulting formation of void walls at the interface therebetween.

On the other hand, each of the resin compositions of Comparative Examples 5 to 7, which contains an acid-modified olefin wax having a high number average molecular weight (Mn) as a compatibilizer, has significantly increased torque and poor workability. In addition, even when a predetermined acid-modified olefin wax (C1) is used, a resin that is high-density polyethylene cannot achieve suitable interfacial adhesion, and neither strength nor workability can be improved (comparison between Comparative Example 10 and Example 1).

This application is entitled to and claims the benefit of Japanese Patent Application No. 2021-100340 filed on June 16, 2021, the disclosure of which including the specification and abstract is incorporated herein by reference in its entirety.

### Industrial Applicability

The resin composition of the present invention contains cellulose fibers uniformly dispersed therein and has high mechanical strength and workability. Such a resin composition can be applied to various applications.

## Claims

1. A resin composition, comprising:
a propylene polymer (A); a cellulose fiber (B); and a maleic anhydride-modified polyolefin wax (C) obtained by grafting maleic anhydride to a polyolefin wax,
wherein
when a total amount of the propylene polymer (A), the cellulose fiber (B), and the maleic anhydride-modified polyolefin wax (C) is 100 parts by mass, the resin composition contains 50 to 99.8 parts by mass of the propylene polymer (A), 0.1 to 49.9 parts by mass of the cellulose fiber (B), and 0.1 to 30 parts by mass of the maleic anhydride-modified polyolefin wax (C),
the polyolefin wax is selected from the group consisting of an ethylene homopolymer, a copolymer of ethylene and an α-olefin having 3 to 12 carbon atoms, a propylene homopolymer, and a copolymer of propylene and ethylene or an α-olefin having 4 to 12 carbon atoms, and
the maleic anhydride-modified polyolefin wax (C) satisfies requirements (i) to (iv) below:
(i) a number average molecular weight (Mn) thereof in terms of polystyrene as measured by gel permeation chromatography (GPC) is 300 to 20,000,
(ii) a softening point thereof as measured according to JIS K2207 is 70 to 160°C,
(iii) a density thereof as measured by a density gradient tube method is 830 to 1,000 kg/m³, and
(iv) an acid value thereof is 30 to 200 mgKOH/g.

2. The resin composition according to claim 1, wherein
the propylene polymer (A) is at least one member selected from the group consisting of a propylene homopolymer, a propylene/ethylene copolymer, and a copolymer of propylene and an α-olefin having 4 to 12 carbon atoms.

3. The resin composition according to claim 1, wherein
the number average molecular weight (Mn) of the maleic anhydride-modified polyolefin wax (C) is 2,000 to 6,000.

4. The resin composition according to claim 1, wherein
the polyolefin wax is a propylene homopolymer or a propylene/ethylene copolymer.

5. The resin composition according to claim 4, wherein
the polyolefin wax is the propylene homopolymer.

6. The resin composition according to claim 1, wherein
the acid value of the maleic anhydride-modified polyolefin wax (C) is 40 to 100 mgKOH/g.

7. The resin composition according to claim 1, wherein
in the maleic anhydride-modified polyolefin wax (C), the number of the maleic anhydride grafted to the polyolefin wax is 0.1 to 10 per molecule.

8. The resin composition according to claim 1, wherein
the cellulose fiber (B) is a cellulose nanofiber.

9. The resin composition according to claim 1, wherein
between the maleic anhydride-modified polyolefin wax (C) and the cellulose fiber (B), a mass ratio (C)/(B) is 0.01 to 0.2.
